# EUROPEAN PATENT APPLICATION

(11) **EP 2 388 628 A2**
(43) Date of publication of application: **23.11.2011**
(21) Application number: 11166176.5
(22) Date of filing: 16.05.2011
(51) Int. Cl.: G02B 6/028

(54) **Optical fiber manufacturing method, optical fiber and optical fiber preform**

(30) Priority: 17.05.2010 JP 2010113179
(71) Applicant: Sumitomo Electric Industries, Ltd., Osaka-shi, Osaka 541-0041 (JP)
(72) Inventor: Sasaoka, Eisuke, Kanagawa 244-8588 (JP)
(74) Representative: HOFFMANN EITLE

(57) **Abstract**

The present invention relates to, for example, a method of easily manufacturing an optical fiber having any refractive index profile with fewer kinds of rods, and an optical fiber is manufactured by preparing a plurality of rods including at least two kinds of rods having different refractive indexes from each other, bundling rods selected from the plurality of rods to construct two or more rod units, producing a preform including a region in which the two or more rod units are combined so as to have a cross-sectional shape having rotational symmetry of order 2 or more, and manufacturing an optical fiber by drawing the preform.

## Description

### BACKGROUND OF THE INVENTION

### Field of the Invention

The present invention relates to an optical fiber manufacturing method and an optical fiber.

### Related Background Art

There is a known method of manufacturing an optical fiber in which a plurality of silica glass rods are bundled to prepare a preform and the optical fiber is manufactured by drawing the preform (see Japanese Patent Application Laid-Open No. 2002-249333). In order to manufacture an optical fiber having a desirable refractive index profile on a cross-section of the preform, this method of manufacturing an optical fiber uses a plurality of rods having a cross-sectional area that is equivalent to or smaller than the area of a region possibly regarded as having the same refractive index on the cross-section of the optical fiber.

### SUMMARY OF THE INVENTION

The inventor has examined the conventional optical fiber manufacturing method described above, and as a result, have discovered the following problems. That is, in the conventional method of manufacturing an optical fiber, when the optical fiber to be manufactured has a fine refractive index profile or a delicate refractive index profile (when precise control of the refractive index profile is required and a slight difference in the refractive index possibly makes a significant impact on characteristics of the obtained optical fiber), that is, when the region possibly regarded as having the same refractive index on the cross-section of the optical fiber is small, a rod having a small cross-sectional area is required to be used, therefore a great number of rods are required to be used. Accordingly, it is not easy to manufacture an optical fiber by the conventional method described above.

Furthermore, in the conventional optical fiber manufacturing method, when the refractive index profile has a lot of gradients of the refractive index on the cross-section of the optical fiber to be manufactured, many kinds of rods having various refractive indexes are required to be used. Accordingly, also in that respect, it is not easy to manufacture an optical fiber by the conventional method described above.

The present invention has been developed to eliminate the problems described above. It is an object of the present invention to provide a method of easily manufacturing an optical fiber by drawing a preform including a region having a desirable refractive index profile with fewer kinds of rods and an optical fiber.

An optical fiber manufacturing method according to the present embodiment comprises a step of manufacturing a preform (optical fiber preform) and a step of drawing the preform. In the step of manufacturing the preform, a rod unit constructed by a plurality of kinds of rods is prepared as the smallest assembling unit, combining the rod unit to have a special cross-sectional shape forms a region, and the preform including the region is produced. Specifically, in the step of manufacturing the preform, a plurality of rod groups having different refractive indexes from each other and each including at least two rods are prepared. The rods belonging to one rod group have the same refractive index. From the prepared plurality of groups of rods, a plurality of rods having two or more different refractive indexes are selected and the selected plurality of rods are arranged in a predetermined shape to construct each of two or more rod units, in a cross-section thereof. In addition, the "predetermined shape" means a shape enabling a cross-sectional shape of rotational symmetry of order 2 or more to be formed in the preform when the rod units are combined. Subsequently, in order to obtain the region constructed by the special cross-sectional shape, the two or more rod units are combined and the region constructed by the two or more rod units thus combined is included in the preform to be produced. Then, drawing the preform thus obtained manufactures an optical fiber. In accordance with the optical fiber manufacturing method, even when the optical fiber to be manufactured has a fine and delicate refractive index profile, it is possible to easily manufacture the optical fiber.

Furthermore, the cross-sectional shape of the region (part of the preform) constructed by combination of the two or more rod units has rotational symmetry of order 2 or more. That is, the cross-sectional shape (rod arrangement structure) of the region constructed by the two or more rod units has such rotational symmetry that the cross-sectional shape coincides with a cross-sectional shape before rotation twice or more, while rotating 360 degrees around the center or the center of gravity of the region on a cross section (corresponding to a surface perpendicular to the longitudinal direction of each rod). In this specification, "the cross-sectional shape before rotation" means the cross-sectional shape at the time of rotation start of the cross-sectional shape around the center of the rod unit, that is, the cross-sectional shape at a zero degree rotation angle, and the number of times for the "cross-sectional shape to be rotated" to coincide with the "cross-sectional shape before rotation" excludes a count of coincidence at the time of rotation start.

In the optical fiber manufacturing method according to the present embodiment, one or more of the rod units are extended, the extended rod units are divided, in the longitudinal direction thereof, into more than one part, and the divided rod units thus obtained may be used to produce the preform. In this case, it is possible to reduce the number of the rods to be prepared and thereby furthermore easily manufacture the optical fiber.

In the optical fiber manufacturing method according to the present embodiment, it is preferable that kinds of the refractive indexes of the prepared plurality of groups of rods be three kinds or less. In addition, it is preferable that the refractive index in a certain cross-sectional region of the optical fiber to be manufactured be obtained by the refractive index average of one or more rods present in the region. In this case, it is possible to reduce the kinds of rods to be prepared and to furthermore easily manufacture the optical fiber.

In the optical fiber manufacturing method according to the present embodiment, it is preferable that on the cross section (corresponding to a surface perpendicular to the longitudinal direction of each rod) of the region obtained by combination of the two or more rod units, the cross-sectional shape of the region has rotational symmetry of order 4, order 6 or order 8. In this case, it is possible to manufacture the optical fiber with decreased polarization mode dispersion.

In the optical fiber manufacturing method according to the present embodiment, it is preferable that every rod constituting the two or more rod units be a solid rod. In this case, it is possible to easily manufacture the optical fiber, compared to the case of using a hollow pipe, in place of the rod.

Furthermore, in the optical fiber manufacturing method according to the present embodiment, it is preferable that the cross-sectional area of the rod constituting a core part of the optical fiber to be manufactured be larger than the cross-sectional area of the rod constituting the other part. In this case, it is possible to reduce the number of the rods to be prepared and furthermore easily manufacture the optical fiber. In addition, a positional discrepancy between the rods and deformation can be suppressed and unevenness of a rod surface and an increase in loss caused by mixture of foreign matters can be suppressed.

An optical fiber that can be manufactured by the optical fiber manufacturing method as described above is an optical fiber with at least one core region. In such optical fiber, the core region has a plurality of rotational symmetry regions around the center of the core. In addition, the rotational symmetry regions are constructed by two or more minute regions that are different both in a radial direction and a circumferential direction.

In an optical fiber preform to provide such optical fiber, a peripheral region adjacent to a part that becomes the core part of the optical fiber is constructed by combination of a plurality of rod units. Accordingly, the refractive index of the peripheral region fluctuates along a circumferential direction around the part that becomes the core part. Specifically, in the peripheral region, the refractive index fluctuates repeatedly, for each rod unit, along the circumferential direction around the part that becomes the core part.

### BRIEF DESCRIPTION OF THE DRAWINGS

Fig. 1 is a cross-sectional view of a rod unit of a first embodiment;

Fig. 2 is a cross-sectional view of an intermediate preform 1 of the first embodiment;

Figs. 3A and 3B are views showing a structure of a drawing apparatus and a cross-sectional structure of an obtained optical fiber;

Fig. 4 is a cross-sectional view of an intermediate preform 2 of a second embodiment;

Fig. 5 is a cross-sectional view of an intermediate preform 3 of a third embodiment; and

Fig. 6 is a cross-sectional view of a preform 4 of a fourth embodiment.

### DESCRIPTION OF THE PREFERRED EMBODIMENTS

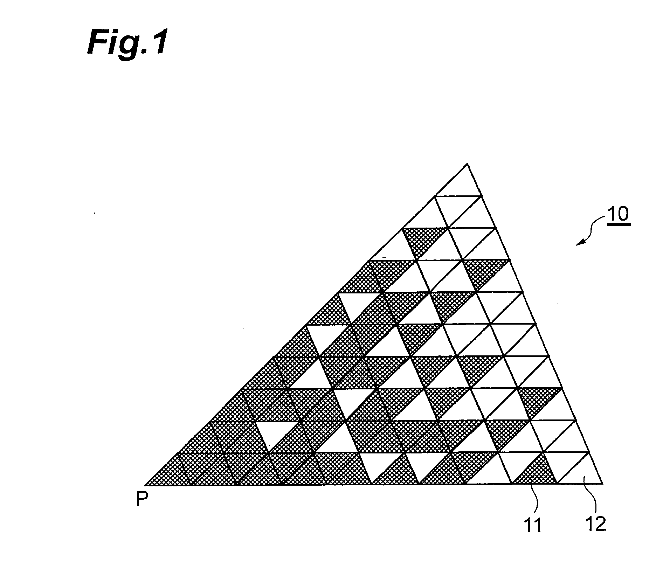

In the following, embodiments of an optical fiber manufacturing method, an optical fiber and an optical fiber preform according to the present invention will be described below, with reference to Figs. 1 to 2, 3A to 3B and 4 to 6, in detail. In the description of the drawings, identical or corresponding components are designated by the same reference numerals, and overlapping description is omitted.

### (First Embodiment)

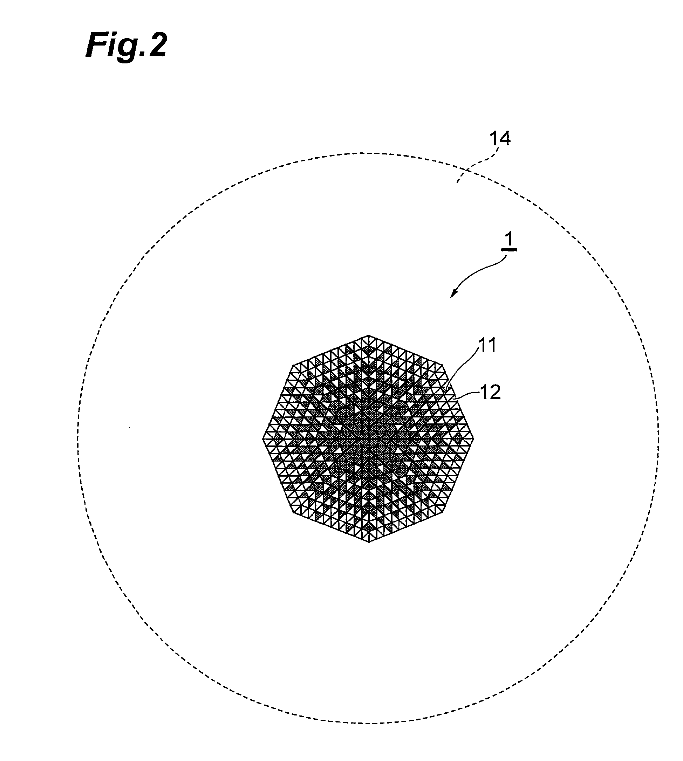

Fig. 1 is a cross-sectional view of a rod unit 10 of a first embodiment. Fig. 2 is a cross-sectional view of an intermediate preform 1 of the first embodiment. The rod unit 10 is constructed by bundling a plurality of first rods 11 and a plurality of second rods 12. The refractive indexes of the first rods 11 and the second rods 12 are different from each other (two kinds of rods). In the drawings, the same kind of hatching shows one group of rods having the same refractive index, while no hatching shows the other group of rods.

Each of the first rods 11 is comprised of silica glass doped with GeO₂. Each of the second rods 12 is comprised of pure silica glass. With respective to the refractive index of the second rod 12, the relative refractive index difference of the first rod 11 is 1 %. The cross sections of the first rod 11 and the second rod 12 are each an isosceles triangle having an apex angle of 45 degrees and have the same area. The rod unit 10 is constructed by 100 pieces in total of the first rods 11 and the second rods 12. The cross-sectional shape of the rod unit 10 is an isosceles triangle having an apex angle of 45 degrees.

In the cross section of the rod unit 10, one first rod 11 is arranged on the first layer from an apex P of the isosceles triangle, three first rods 11 are arranged on the second layer and five first rods 11 are arranged on the third layer. Subsequently, seven pieces in total (six first rods 11 and one second rod 12) are arranged on the fourth layer and the second rod 12 is located at the center. Nine pieces in total (seven first rods 11 and two second rods 12) are arranged on the fifth layer and aligned in the order of two first rods 11, one second rod 12, three first rods 11, one second rod 12 and two first rods 11.

Thereafter, in the same manner, the plurality of first rods 11 and the plurality of second rods 12 are regularly arranged on each layer. On the tenth layer serving as the outermost layer, 19 pieces in total of rods (two first rods 11 and seventeen second rods 12) are arranged and aligned in the order of five second rods 12, one first rod 11, seven second rods 12, one first rod 11, and five second rods 12. As it goes further away from the apex P, a rate of the number of the first rods 11 to the total number of the rods on each layer becomes gradually smaller.

In the intermediate preform 1 shown in Fig. 2, eight rod units 10 (smallest assembling unit) shown in Fig. 1 are used and the eight rod units 10 are combined to have a cross-sectional shape having rotational symmetry of order eight. In the intermediate preform 1, the relative refractive index difference of a center part with reference to the refractive index of pure silica glass is 1 % and a refractive index profile is roughly square of a distance in a radial direction from a center position.

In addition, since the eight rod units 10, constituting the intermediate preform 1, have a common structure, it is possible to easily manufacture the eight rod units 10 as below. That is, 100 pieces in total of the first rods 11 and the second rods 12 are aligned as shown in Fig. 1 to form a rod unit, and the rod unit is extended, then the rod unit extended in a longitudinal direction is divided into eight pieces to manufacture eight rod units 10. Accordingly, the intermediate preform 1 is also easily manufactured, which significantly improves productivity of the intermediate preform 1.

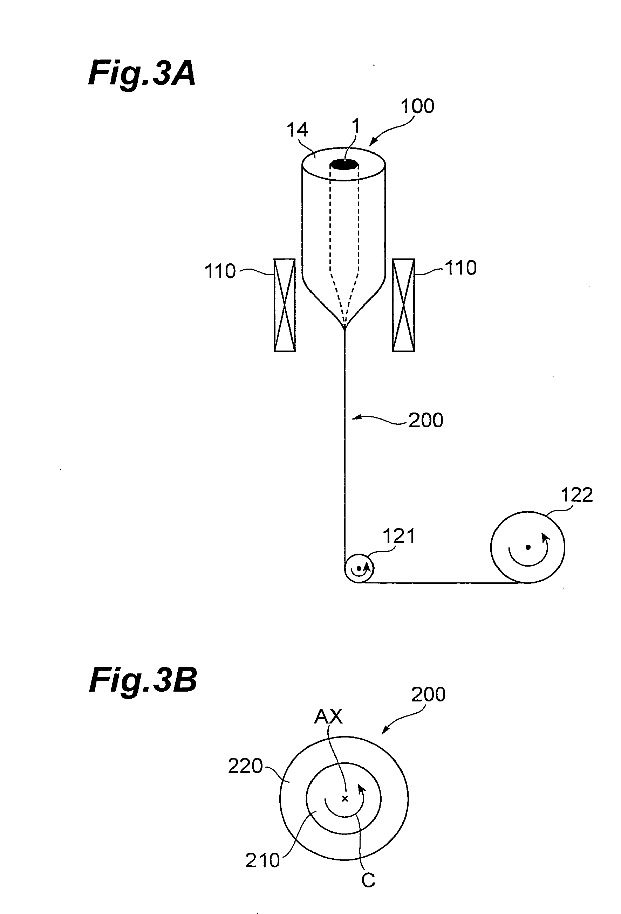

To the outer circumstance of the intermediate preform 1 thus manufactured, a cladding layer 14 comprised of pure silica glass is added to manufacture a preform and the preform is drawn. Fig. 3A is a view showing a structure of a drawing apparatus for manufacturing an optical fiber from the preform manufactured as described above. The preform 100 manufactured as described above is constructed by the intermediate preform 1 and on the outer periphery thereof, the cladding layer 14. The drawing apparatus of Fig. 3A is used to obtain an optical fiber also from the preform manufactured in each embodiment below. As shown in Fig. 3A, the drawing apparatus includes a heater 110 for heating an end of the preform 100 and a drum 122 for rolling an optical fiber 200 drawn through a roller 121.

Here, the cladding layer 14 provided on the outer periphery of the intermediate preform 1 may be a glass layer made by integrating a plurality of pure silica glass rods surrounding the outer periphery of the intermediate preform 1. Alternatively, a pure silica glass pipe into which the intermediate preform 1 is inserted is prepared as the cladding layer 14 and integrating them together may manufacture the preform. Alternatively, the cladding layer 14 may be a glass layer in which pure silica glass particles are cumulated on the outer periphery of the intermediate preform 1 and made into transparent glass. Such a preform is drawn by the drawing apparatus of Fig. 3A and the optical fiber 200 is manufactured.

In the optical fiber 200 thus obtained, as shown in Fig. 3B, a part (intermediate preform 1) shown by the solid line in Fig. 2 serves as a core part 210 having a diameter of 50 µm and a part (cladding layer 14) shown by the broken line in Fig. 2 serves as a cladding part 220 having an outer diameter of 125 µm, and the optical fiber 200 thus constructed is manufactured.

In the present embodiment, there are two kinds of the refractive indexes of the rods originally prepared. Using only the two kinds of rods, the first rods 11 and the second rods 12 having different refractive indexes from each other, enables to easily manufacture a graded index type multi-mode optical fiber in which an average refractive index in a circumferential direction is obtained from an average refractive index profile in a radial direction (for each region in the radial direction (for each layer counted from the apex P), and the average refractive index is made into a refractive index profile in the radial direction that is a roughly square profile.

The range from the apex P to the third layer in Fig. 1 and the range from the center to the third layer in Fig. 2 are constructed only by the first rods 11 having the high refractive index. Accordingly, seventy-two first rods 11 in the range from the center to the third layer in Fig. 2 may be replaced with one circular cross section rod having the same refractive index as that of the first rods 11. The cross-sectional area of one circular cross section rod equals to a total sum of the cross-sectional area of the seventy-two first rods 11.

When the seventy-two first rods 11 are used in the range from the center to the third layer, at the time of integration thereof, it is necessary to sufficiently pay attention to suppressing a positional discrepancy between the rods and deformation, and it is necessary to sufficiently pay attention to suppressing unevenness of a rod surface and an increase in loss caused by mixture of foreign matters. In contrast, when one rod having a large cross section is used in place of the seventy-two first rods 11, those problems are avoided beforehand.

### (Second Embodiment)

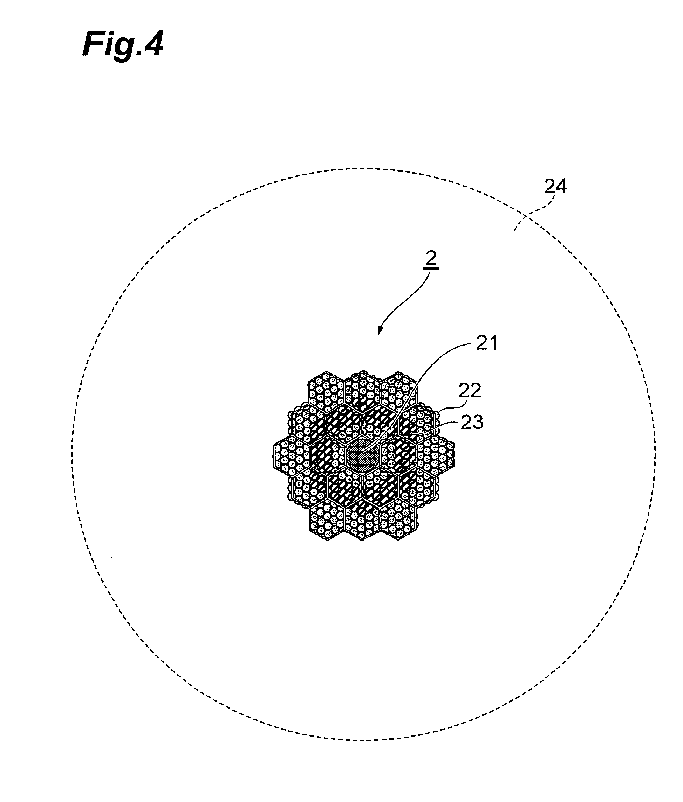

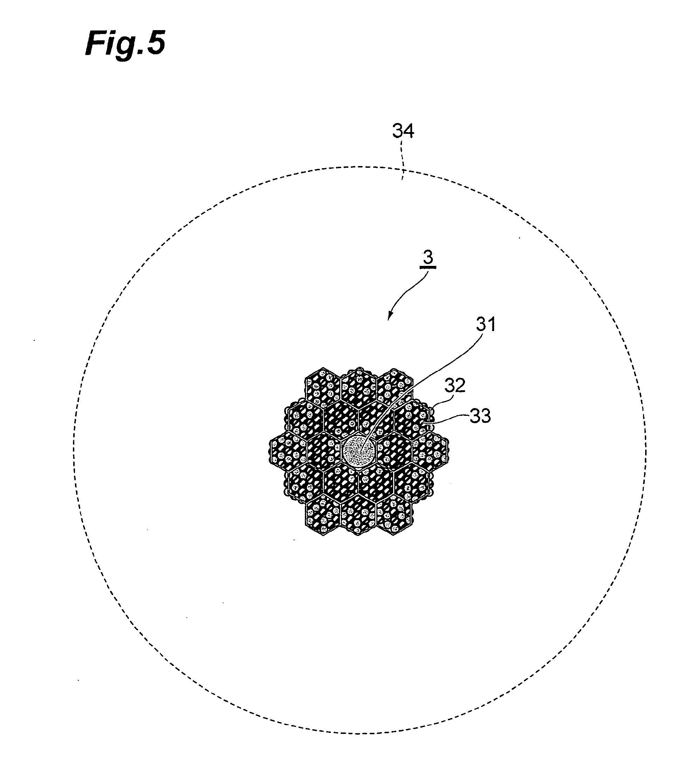

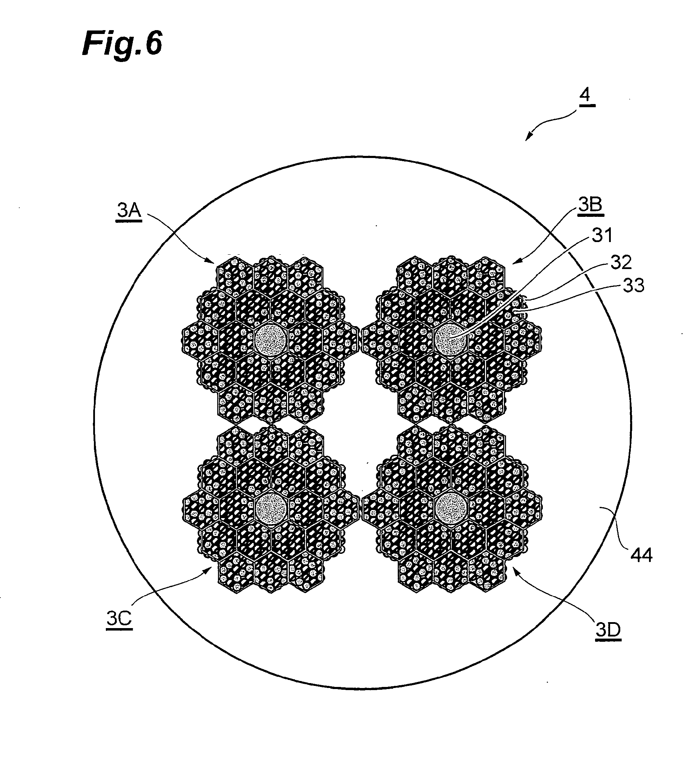

Fig. 4 is a cross-sectional view of an intermediate preform 2 of a second embodiment. The intermediate preform 2 is constructed by one first rod 21, a plurality of second rods 22 and a plurality of third rods 23. The first rod 21, the second rods 22 and the third rods 23 have different refractive indexes from each other (three kinds of rods). Here, in the drawing, the same kind of hatching shows the rods having the same refractive index. The double solid line indicating a hexagonal shape in Fig. 4 is an imaginary line to make distribution of the plurality of kinds of rods easily understood, and the similar imaginary lines are shown in Fig. 5 and Fig. 6 showing each embodiment below.

The first rod 21 is comprised of silica glass doped with GeO₂ Each of the second rods 22 is comprised of pure silica glass. Each of the third rods 23 is comprised of silica glass doped with F-element. With respect to the refractive index of the second rod 22, the relative refractive index difference of the first rod 21 is 0.35 % and the relative refractive index difference of the third rod 23 is -0.05 %. The cross sections of the first rod 21, the second rod 22 and the third rod 23 are each a circular shape. The cross-sectional areas of the second rod 22 and the third rod 23 are the same, and compared to their cross-sectional areas, the cross-sectional area of the third rod 11 is large.

In the cross section of the intermediate preform 2, the first rod 21 having a large cross-sectional area is arranged at the center, and on the first layer surrounding the periphery of the first rod 21, six rod units are arranged, and on the second layer further surrounding the periphery of those, 12 rod units are arranged. In the drawing, the imaginary lines surrounding these rod units are shown, each indicating a regular hexagon.

Each of the six rod units arranged on the first layer surrounding the immediate periphery of the first rod 21 at the center has the same structure, and is constructed by the plurality of second rods 22 arranged at the closer side to the center and the plurality of third rods 23 arranged at the farther side from the center. On the second layer surrounding the first layer, 12 pieces in total of rod units are arranged, where a rod unit constructed by the plurality of third rods 23 arranged on the closer side to the center and the plurality of second rods 22 arranged at the farther side from the center and another rod unit constructed by only the plurality of second rods 22 are alternately arranged. That is, the preform 2 is constructed by the first rod 21 at the center and three kinds of the rod units. In addition, each rod unit is constructed by rods having one kind or two kinds of the refractive indexes.

Also in the present embodiment, similarly to the first embodiment, a preform 100 is manufactured by adding a cladding layer 24 comprised of pure silica glass to the outer periphery of the intermediate preform 2. Subsequently, the preform 100 is drawn by the drawing apparatus shown in Fig. 3A to produce an optical fiber. Also, in the second embodiment, the optical fiber obtained has a similar structure to the optical fiber 200 shown in Fig. 3B. Specifically, the drawing apparatus shown in Fig. 3A manufactures an optical fiber in which the first rod 21 serves as a core part (corresponding to the region 210 in Fig. 3B) having a diameter of 7.5 µm and the cladding layer 24 serves as a cladding part (corresponding to the region 220 in Fig. 3B) having an outer diameter of 125 µm. The optical fiber thus manufactured comprises, in the order from the center, a core having a relative refractive index difference of 0.35 %, an inner cladding having a relative refractive index difference of 0, a trench having a relative refractive index difference of -0.50 %, and an outer cladding having a relative refractive index difference of 0. The optical fiber is a bending loss reduced type one.

### (Third Embodiment)

Fig. 5 is a cross-sectional view of an intermediate preform 3 of a third embodiment. The intermediate preform 3 includes one first rod 31, a plurality of second rods 32, and a plurality of third rods 33 (three kinds of rods). The first rod 31 and the third rods 33 have the same refractive index, but in contrast, the second rods 32 have a different refractive index. Here, in the drawing, the same kind of hatching shows the rods having the same refractive index. In addition, the double solid line indicating a hexagonal shape in Fig. 5 is an imagery line, as described above.

The first rod 31 and each of the second rods 32 are comprised of pure silica glass. Each of the third rods 33 is comprised of silica glass doped with F-element. With respect to the refractive indexes of the first rod 31 and the second rod 32, the relative refractive index difference of the third rod 33 is -0.80 %. The cross sections of the first rod 31, the second rod 32 and the third rod 33 are each a circular shape. The cross-sectional areas of the second rod 32 and the third rod 33 are the same and compared to their cross-sectional areas, the cross-sectional area of the first rod 31 is large.

On the cross section of the intermediate preform 3, the first rod 31 having the large cross-sectional area is arranged at the center, and on the first layer surrounding the periphery of the first rod 31, six rod units are arranged, and on the second layer further surrounding the periphery of those, 12 rod units are arranged. In the drawing, each imaginary line surrounding these rod units is shown, indicating a regular hexagon.

Also in the present embodiment, similarly to the first embodiment, the preform 100 is manufactured by adding a cladding layer 34 comprised of pure silica glass to the outer periphery of the intermediate preform 3. Subsequently, the preform 100 is drawn by the drawing apparatus shown in Fig. 3A to manufacture an optical fiber. Also, in the third embodiment, the optical fiber obtained has a similar structure to that of the optical fiber 200 shown in Fig. 3B. Specifically, the drawing apparatus shown in Fig. 3A manufactures an optical fiber in which the first rod 21 serves as a core part (corresponding to the region 210 in Fig. 3B) having a diameter of 7.5 µm and the cladding layer 24 serves as a cladding part (corresponding to the region 220 in Fig. 3B) having an outer diameter of 125 µm. The optical fiber thus manufactured has an analogous refractive index profile to that of the optical fiber manufactured in the second embodiment, and includes, in the order from the center, a core, an inner cladding, a trench and an outer cladding. The inner cladding and the outer cladding each are constructed by combination of the second rods 32 comprised of pure silica glass and the third rods 33 comprised of F-element-doped silica glass, having the refractive index that is an average of the refractive indexes of those rods. The trench is constructed only by the three rods 33 comprised of F-element-doped silica glass.

In place of a part or the whole of the third rods 33 comprised of F-element-doped silica glass, a hollow silica glass pipe may be used. When such pipe is used, the refractive index of a hollow part is significantly smaller than the refractive index of silica glass, so a larger refractive index difference can be achieved or the same level of the refractive index difference can be achieved with the smaller number of pipes. However, when such pipe is used, the hollow part of the pipe is required to be maintained during the drawing. In contrast, when a solid rod is used, manufacturing is easy.

### (Fourth Embodiment)

Fig. 6 is a cross-sectional view of a preform 4 of a fourth embodiment. The preform 4 includes intermediate preforms 3A, 3B, 3C and 3D each having the same structure as that of the intermediate preform 3 shown in Fig. 5 and these intermediate preforms 3A to 3D are covered with a cladding layer 44. A structure in which the intermediate preforms 3A to 3D are surrounded by the cladding layer 44 is obtained, for example, by inserting the intermediate preforms 3A to 3D with the periphery thereof surrounded by a plurality of silica glass rods into a silica glass pipe, and then integrating (heating) them. The preform 4 is drawn by the drawing apparatus shown in Fig. 3A to manufacture an optical fiber. The optical fiber manufactured is a multi-core optical fiber having four cores in the common cladding. Meanwhile, the double solid line indicating a hexagonal shape in Fig. 6 is an imagery line, as described above.

As described above, in the optical fiber manufacturing method according to the present embodiments, two or more rod units each constructed by a plurality of kinds of rods are used as the smallest assembling unit, and by combining the two or more rod units to have a special cross-sectional shape, a desirable refractive index profile is achieved. A preform including a region constructed by fewer kinds of rods to have a desirable refractive index profile is drawn to manufacture an optical fiber. Therefore, it is possible to easily manufacture an optical fiber preform having any refractive index profile and the optical fiber.

## Claims

1. An optical fiber manufacturing method, comprising the steps of:
preparing a plurality of rod groups having different refractive indexes from each other, each of the rod groups including at least two rods, the refractive indexes of the rods in one rod group being equal to each other;
selecting a plurality of rods having two or more different refractive indexes from the plurality of rod groups, and then constructing two or more rod units each being constituted by the selected plurality of rods arranged in a predetermined shape, in a cross-section thereof, the predetermined shape enabling a cross-sectional shape of rotational symmetry of order 2 or more to be formed in a preform when the rod units are combined;
producing the preform including a region in which the two or more rod units are combined so as to have a cross-sectional shape having rotational symmetry of order 2 or more; and
manufacturing an optical fiber by drawing the preform.

2. The optical fiber manufacturing method according to claim 1, wherein one or more of the rod units are extended, the extended rod units are divided, in a longitudinal direction thereof, into more than one part, and the divided rod units thus obtained are used to produce the preform.

3. The optical fiber manufacturing method according to claim 1, wherein kinds of the refractive indexes of the plurality of groups of rods are three kinds or less, and
wherein the refractive index in a certain cross-sectional region of the optical fiber to be manufactured is obtained by a refractive index average of one or more rods present in the region.

4. The optical fiber manufacturing method according to claim 1, wherein a cross section of the region obtained by combination of the two or more rod units has rotational symmetry of order of four, six or eight.

5. The optical fiber manufacturing method according to claim 1, wherein every rod constituting the two or more rod units is a solid rod.

6. The optical fiber manufacturing method according to claim 1, wherein a cross-sectional area of the rod constituting a core part of the optical fiber to be manufactured is larger than a cross-sectional area of the rod constituting another part.

7. An optical fiber comprising at least one core region, wherein the core region has a plurality of rotational symmetry regions around a center of the core, and
wherein the rotational symmetry regions are constructed by two or more minute regions that are different both in a radial direction and a circumferential direction.
